# EUROPEAN PATENT APPLICATION

(11) **EP 3 632 616 A1**
(43) Date of publication of application: **08.04.2020**
(21) Application number: 18805579.2
(22) Date of filing: 23.05.2018
(51) Int. Cl.: B24B 57/02, B24B 1/04

(54) **ABRASIVE PARTICLE RECOVERY SYSTEM FOR ULTRASONIC PROCESSING DEVICE**

(30) Priority: 25.05.2017 JP 2017103892
(71) Applicant: Ferrotec Holdings Corporation, Tokyo 103-0027 (JP)
(72) Inventor: TAKASAKI Mitsuya, Tamano Okayama 706-8651 (JP)
(74) Representative: Barker Brettell LLP
(86) International application number: PCT/JP2018/019803
(87) International publication number: WO 2018/216721

(57) **Abstract**

Provided is an abrasive particle recovery system for an ultrasonic machining system enabling recovery of abrasive particles from a suspension to be disposed of and reuse of the abrasive particles themselves. An abrasive particle recovery system (10) for an ultrasonic machining apparatus (50) that machines a workpiece by micro-vibrating a horn (60) with ultrasonic waves while supplying a suspension having abrasive particles dispersed therein between the horn (60) and the workpiece, the abrasive particle recovery system includes: a storage tank (12) configured to store the suspension to be supplied to the workpiece; a suspension supply path (14) configured to supply the suspension stored in the storage tank (12) to the workpiece; a suspension recovery path (16) configured to recover the suspension supplied, and to supply, into the storage tank (12), the suspension recovered; a withdrawal path (18) configured to withdraw part of the suspension stored in the storage tank (12); and an abrasive particle recoverer (20) configured to perform a solid-liquid separation of the suspension withdrawn through the withdrawal path (18), to thereby recover the abrasive particles.

## Description

### TECHNICAL FIELD

The present invention relates to an ultrasonic machining apparatus, and particularly relates to a system for recovering abrasive particles from a suspension having the abrasive particles dispersed therein, the abrasive particles being used when machining is performed using the ultrasonic machining apparatus.

### BACKGROUND ART

As disclosed in Patent Document 1, when a hard and brittle material, such as ceramics or silicon, is machined using an ultrasonic machining apparatus, a suspension having abrasive particles dispersed in a liquid is supplied between a horn as a machining tool and a workpiece. The suspension used for machining the workpiece is generally recovered into a storage tank and reused.

### PRIOR ART DOCUMENTS

### PATENT DOCUMENTS

Patent Document 1: Japanese Unexamined Patent Application Publication No. 2011-194547

### SUMMARY OF THE INVENTION

### PROBLEMS TO BE SOLVED BY THE INVENTION

As in the ultrasonic machining apparatus disclosed in Patent Document 1, circulating the suspension is economically effective because the abrasive particles are not thrown away after use. However, machining swarf of the workpiece and the like get mixed in the suspension to be recovered into the storage tank, and further the liquid in which the abrasive particles are dispersed is vaporized. For those reasons, the longer the circulation time is, the greater the ratio of dispersed particles in the suspension is.

The suspension having an extremely high ratio of the dispersed particles becomes less fluid, and is not suitable for use in machining. Although a liquid may be supplied in order to lower the ratio of the dispersed particles in the suspension, the dispersed particles include the machining swarf of the workpiece and the like, and thus, mere lowering of the ratio of the dispersed particles will cause a lower machining speed.

For this reason, the suspension is currently disposed of completely or partially at regular times, and a work of supplying a new suspension is performed, despite the fact that the abrasive particles used as a polishing material can be reused in a long term because they are made of a high hard material, such as diamond, silicon carbide, or boron carbide.

Therefore, an object of the present invention is to provide an abrasive particle recovery system for an ultrasonic machining apparatus that enables recovery of abrasive particles from a suspension to be disposed of and reuse of the abrasive particles themselves.

### MEANS FOR SOLVING THE PROBLEMS

An abrasive particle recovery system for an ultrasonic machining apparatus according to the present invention for achieving the above-described object is an abrasive particle recovery system for an ultrasonic machining apparatus that machines a workpiece by micro-vibrating a horn with ultrasonic waves while supplying a suspension having abrasive particles dispersed therein between the horn and the workpiece, the abrasive particle recovery system comprising: a storage tank configured to store the suspension to be supplied to the workpiece; a suspension supply path configured to supply the suspension stored in the storage tank to the workpiece; a suspension recovery path configured to recover the suspension supplied, and to supply, into the storage tank, the suspension recovered; a withdrawal path configured to withdraw part of the suspension stored in the storage tank; and an abrasive particle recoverer configured to perform a solid-liquid separation of the suspension withdrawn through the withdrawal path, to thereby recover the abrasive particles.

Further, in the abrasive particle recovery system having the above-described features, a new suspension is supplied into the storage tank regularly or irregularly. The suspension to be withdrawn through the withdrawal path may be a suspension overflowing from the storage tank. Such a feature makes it possible to maintain a constant amount of the suspension stored in the storage tank. In addition, a power unit like a pump need not be provided on the withdrawal path when part of the suspension is withdrawn.

Furthermore, in the abrasive particle recovery system having the above-described features, a filter may be used for the solid-liquid separation in the abrasive particle recoverer, and the filter may include mesh openings sized to be smaller than an average particle size of the abrasive particles and to be larger than an average particle size of grinding swarf of the workpiece. Such a feature enables a simple configuration of the abrasive particle recoverer. In addition, a liquid component separated by the solid-liquid separation contains the grinding swarf of the workpiece other than the liquid, and thus only the abrasive particles remain in a solid component.

### EFFECTS OF THE INVENTION

The abrasive particle recovery system for an ultrasonic machining apparatus having the above-described features makes it possible to recover abrasive particles from a suspension to be disposed of and to reuse the abrasive particles themselves.

### BRIEF DESCRIPTION OF THE DRAWINGS

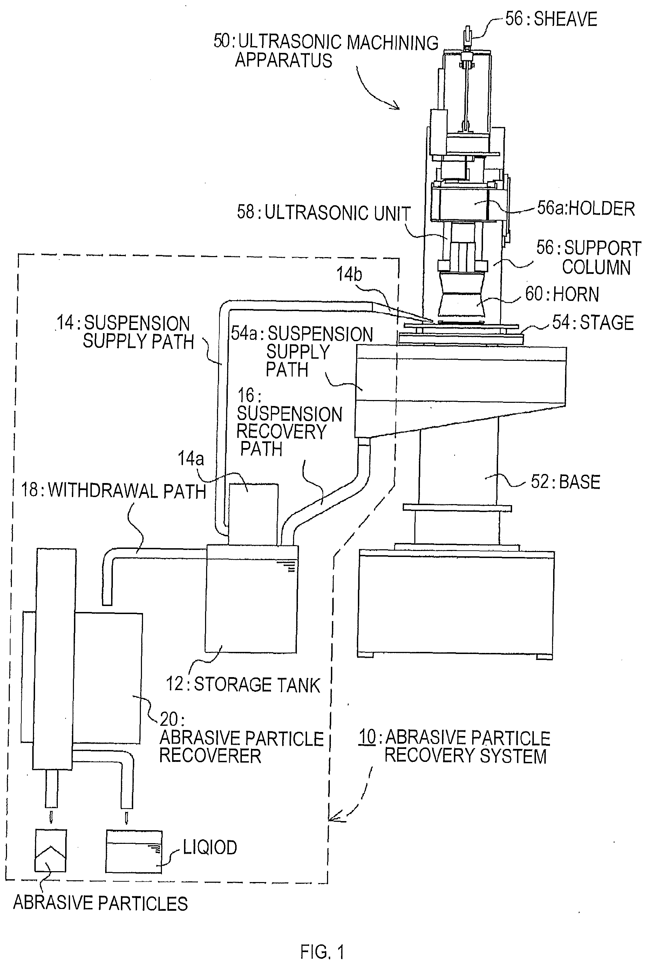

FIG. 1 is a diagram showing a configuration of an abrasive particle recovery system for an ultrasonic machining apparatus according to an embodiment.

### MODE FOR CARRYING OUT THE INVENTION

An embodiment of an abrasive particle recovery system for an ultrasonic machining apparatus according to the present invention will be described below in detail with reference to the drawing. In the drawing, FIG. 1 is a diagram showing a configuration of an abrasive particle recovery system for an ultrasonic machining apparatus according to the embodiment.

### [Basic Configuration of Ultrasonic Machining Apparatus]

Firstly, one example of an ultrasonic machining apparatus 50 to which an abrasive particle recovery system for an ultrasonic machining apparatus according to an embodiment (hereinafter, simply referred to as an abrasive particle recovery system 10) is applied is described with reference to FIG. 1. The ultrasonic machining apparatus 50 according to the embodiment comprises a base 52, a stage 54 arranged with the base 52 as a base, and a support column 56, and further comprises an ultrasonic unit 58 supported by the support column 56. The base 52 is a base for arrangement of the stage 54 and the support column 56. The stage 54 has a function as a surface plate for placement and fixing of a workpiece, and a suspension recovery pan 54a is provided around the stage 54.

The support column 56 is a support structure provided to stand with the base 52 as a base, and is provided to extend to a position at least higher than the stage 54. The ultrasonic unit 58 supported via a holder 56a is provided to the support column 56 according to the embodiment.

The ultrasonic unit 58 is a unit comprising an ultrasonic generator, the details of which are not shown. The ultrasonic unit 58 is supported by the above-described holder 56a and suspended via a sheave 56b, which is provided to the support column 56, in a manner that the ultrasonic unit 58 is balanced with a not-shown counterweight. The ultrasonic unit 58 is arranged such that the stage 54 is positioned at a position facing a lower end of the ultrasonic unit 58. A machining tool called a horn 60 is attached to the lower end of the ultrasonic unit 58.

### [Abrasive Particle Recovery System]

The abrasive particle recovery system 10 comprises at least a storage tank 12, a suspension supply path 14, a suspension recovery path 16, a withdrawal path 18, and an abrasive particle recoverer 20. The storage tank 12 is a tank for storing a suspension having abrasive particles dispersed in a liquid. For the abrasive particles to be dispersed in the liquid, a material available for machining a hard and brittle material, such as ceramics or silicon, needs to be selected. Specific examples of the material for the abrasive particles may include diamond, silicon carbide, boron carbide, and the like. The ratio of the abrasive particles to the liquid may be adjusted within a preferable range depending on the material of the workpiece, the machining speed, and so on.

Further, the storage tank 12 comprises a not-shown cooling device. In the ultrasonic machining apparatus 50, the suspension is supplied between the horn 60 and the workpiece, and grinding is performed using the abrasive particles dispersed in the suspension. Thus, a temperature of the suspension containing the abrasive particles is increased due to friction between the workpiece and the horn 60. In the abrasive particle recovery system 10 according to the embodiment, the suspension used in machining is recovered and returned into the storage tank 12, and thus, the temperature of the suspension stored in the storage tank 12 is controlled so as to be inhibited from increasing.

The suspension supply path 14 is a path for supplying the suspension stored in the storage tank 12 between the workpiece placed on the stage 54 and the horn 60 as the machining tool. A pump 14a is provided to the suspension supply path 14. Further, the suspension supply path 14 is configured to supply, via a nozzle 14b, the suspension to the vicinity of a portion where the horn 60 and the workpiece contact each other, and the amount of the suspension to be supplied is adjusted with the pump 14a.

The suspension recovery path 16 is a path for returning the suspension, which has been used for machining the workpiece and flowed down from the stage 54 into the suspension recovery pan 54a, into the storage tank 12. The suspension recovery pan 54a includes a slope surface along which the suspension flows down, and the suspension recovery path 16 includes an introduction port at a position corresponding to a bottom portion of the suspension recovery pan 54a. This results in a configuration in which the suspension can be recovered in a manner that the suspension descends by gravity. The suspension flowing into the storage tank 12 through the suspension recovery path 16 contains grinding swarf of the workpiece and the like in addition to the abrasive particles.

In the suspension recovery path 16 as described above, the ratio of the contained particles (the grinding swarf of the workpiece and the like) other than the abrasive particles in the suspension stored in the storage tank 12 is increased with a lapse of time. To cope with this, a new suspension is supplied into the storage tank 12 regularly or irregularly, so that the content ratio of the abrasive particles in the suspension is adjusted. The withdrawal path 18 is a path for withdrawing part of the suspension within the storage tank 12, which is increased because of the supply of the new suspension, to an outside of the system.

The withdrawal path 18 may be provided with a drive device, such as a pump; however, an introduction port of a so-called overflow type is provided, through which the suspension stored in the storage tank 12 is recovered when exceeding a specified amount. This enables withdrawal of the suspension without a power unit in the path.

The abrasive particle recoverer 20 is an element having a function of temporarily storing the suspension withdrawn through the withdrawal path 18 as well as performing solid-liquid separation of the temporarily stored suspension to recover the abrasive particles. For the solid-liquid separation in the abrasive particle recoverer 20, various methods are selectable, for example, deposition separation, centrifugal separation, filter separation, and so on. However, adoption of the filter separation is desirable in the case of considering device dimensions, separation efficiency, separation accuracy, device costs, and so on. In a filter to be used in the filter separation, a size of mesh openings is to be smaller than an average particle size of the abrasive particles and greater than an average particle size of the grinding swarf of the workpiece. Selection of such a filter causes the grinding swarf of the workpiece to be contained in a liquid component separated by the solid-liquid separation, and only the abrasive particles remain in a solid component. After that, the abrasive particles recovered by the abrasive particle recoverer 20 can be used when the new suspension is prepared. Consequently, a total amount of the abrasive particles used in machining can be reduced.

### [Machining with Ultrasonic Machining Apparatus and Recovery with Recovery System]

In the abrasive particle recovery system 10 for the ultrasonic machining apparatus 50 configured as above, firstly, the suspension stored in the storage tank 12 is supplied between the workpiece placed on the stage 54 and the horn 60 through the suspension supply path 14. Next, the supplied suspension flows down from the stage 54, is recovered by the suspension recovery pan 54a, and returned into the storage tank 12 through the suspension recovery path 16.

In addition to supply and recovery of the suspension, the new suspension is added into the storage tank 12. The increased suspension (part of the suspension) with the addition of the suspension is withdrawn to the abrasive particle recoverer 20 through the withdrawal path 18. The suspension withdrawn to the abrasive particle recoverer 20 is subjected to the solid-liquid separation, thus being separated into the abrasive particles and the liquid containing the grinding swarf of the workpiece. The abrasive particles recovered using the solid-liquid separation are usable again as abrasive particles forming a suspension.

In the present embodiment, a specific configuration of the ultrasonic machining apparatus 50 is described with reference to FIG. 1. However, the ultrasonic machining apparatus 50 to which the abrasive particle recovery system 10 according to the present embodiment is applied is not limited to the above-described configuration. That is, the abrasive particle recovery system 10 is applicable to general apparatuses performing machining with the horn 60 utilizing ultrasonic vibrations.

### [Effects]

Conventionally, part of increased suspension with addition of a new suspension has been disposed of. Contrastingly, use of the abrasive particle recovery system 10 configured as above makes it possible to recover abrasive particles from the suspension conventionally disposed of, and to reuse the abrasive particles themselves.

### EXPLANATION OF REFERENCE NUMERALS

10...abrasive particle recovery system, 12...storage tank, 14...suspension supply path, 14a...pump, 14b...nozzle, 16...suspension recovery path, 18...withdrawal path, 20...abrasive particle recoverer, 50...ultrasonic machining apparatus, 52...base, 54...stage, 54a...suspension recovery pan, 56...support column, 56a...holder, 56b...sheave, 58...ultrasonic unit, 60...horn.

## Claims

1. An abrasive particle recovery system for an ultrasonic machining apparatus that machines a workpiece by micro-vibrating a horn with ultrasonic waves while supplying a suspension having abrasive particles dispersed therein between the horn and the workpiece, the abrasive particle recovery system comprising:
a storage tank configured to store the suspension to be supplied to the workpiece;
a suspension supply path configured to supply the suspension stored in the storage tank to the workpiece;
a suspension recovery path configured to recover the suspension supplied, and to supply, into the storage tank, the suspension recovered;
a withdrawal path configured to withdraw part of the suspension stored in the storage tank; and
an abrasive particle recoverer configured to perform a solid-liquid separation of the suspension withdrawn through the withdrawal path, to thereby recover the abrasive particles.

2. The abrasive particle recovery system for an ultrasonic machining apparatus according to claim 1,
wherein a new suspension is supplied into the storage tank regularly or irregularly, and
wherein the suspension to be withdrawn through the withdrawal path is a suspension overflowing from the storage tank.

3. The abrasive particle recovery system for an ultrasonic machining apparatus according to claim 1 or 2,
wherein a filter is used for the solid-liquid separation in the abrasive particle recoverer, and
wherein the filter includes mesh openings sized to be smaller than an average particle size of the abrasive particles and to be larger than an average particle size of grinding swarf of the workpiece.

## Amended claims

### Amended claims under Art. 19.1 PCT

1. (Amended) An abrasive particle recovery system for an ultrasonic machining apparatus that machines a workpiece by micro-vibrating a horn with ultrasonic waves while supplying a suspension having abrasive particles dispersed therein between the horn and the workpiece, the abrasive particle recovery system comprising:
a circulation path comprising:
a storage tank configured to store the suspension to be supplied to the workpiece;
a suspension supply path configured to supply the suspension stored in the storage tank to the workpiece; and
a suspension recovery path configured to recover the suspension supplied, and to supply, into the storage tank, the suspension recovered;
a withdrawal path configured to withdraw an increased amount of the suspension with addition of a new suspension to the suspension stored in the storage tank forming the circulation path; and
an abrasive particle recoverer configured to perform a solid-liquid separation of the suspension withdrawn through the withdrawal path, to thereby recover the abrasive particles and store, outside the system, the abrasive particles recovered.

2. (Amended) The abrasive particle recovery system for an ultrasonic machining apparatus according to claim 1,
wherein the addition of the new suspension into the storage tank is performed regularly or irregularly, and
wherein the suspension to be withdrawn through the withdrawal path is a suspension overflowing from the storage tank.

3. The abrasive particle recovery system for an ultrasonic machining apparatus according to claim 1 or 2,
wherein a filter is used for the solid-liquid separation in the abrasive particle recoverer, and
wherein the filter includes mesh openings sized to be smaller than an average particle size of the abrasive particles and to be larger than an average particle size of grinding swarf of the workpiece.

Statement under Art. 19.1 PCT
The invention of claim 1 is amended to be recited as "comprising: a circulation path comprising: ... a suspension recovery path", "a withdrawal path configured to withdraw an increased amount of the suspension with addition of a new suspension to the suspension stored in the storage tank forming the circulation path", and "an abrasive particle recoverer ... recover the abrasive particles and store, outside the system, the abrasive particles recovered", thereby clarifying that the withdrawn suspension is disposed of and a new suspension is added, and that the abrasive particles separated by a solid-liquid separation are stored outside the system.

This amendment is considered to have clarified difference in ideas. Specifically, the suspension itself is discharged and disposed of outside the system and that the abrasive particles are stored outside the system, whereas Cited References 1 and 2 disclose only reuse of the suspension and the abrasive particles within the system.

The amended matter in claim 2 is "the addition of the new suspension into the storage tank is performed regularly or irregularly", and this amendment is made for consistency with the amendment in claim 1 clarifying that the suspension is added.
